# EUROPEAN PATENT APPLICATION

(11) **EP 4 697 132 A1**
(43) Date of publication of application: **18.02.2026**
(21) Application number: 24839919.8
(22) Date of filing: 10.06.2024
(51) Int. Cl.: G06F 1/16

(54) **HOUSING AND ELECTRONIC DEVICE COMPRISING SAME**

(30) Priority: 07.07.2023 KR 20230088200; 11.10.2023 KR 20230135027
(71) Applicant: Samsung Electronics Co., Ltd., Suwon-si, Gyeonggi-do 16677 (KR)
(72) Inventor: HWANG, Seongyu, Suwon-si Gyeonggi-do 16677 (KR)
(74) Representative: Gulde & Partner
(86) International application number: PCT/KR2024/007900
(87) International publication number: WO 2025/014104

(57) **Abstract**

An electronic device is provided. The electronic device comprises a first housing and a second housing, wherein: the first housing comprises a rear plate which includes at least one first opening, a support bracket which is disposed adjacent to the rear plate and supports the rear plate, and at least one rubber member which is arranged to pass through the first opening of the rear plate; and the support bracket comprises a fastening portion which is disposed adjacent to the rubber member, at least one stationary portion which extends from one side of the fastening portion, a support portion which extends from the at least one stationary portion and at least a part of which is arranged to face the rear plate, and at least one rotary portion which is connected to the support portion and rotatably coupled to the support portion.

## Description

### [TECHNICAL FIELD]

The disclosure relates to a housing and an electronic device including the same.

### [BACKGROUND ART]

The term "electronic device" may mean a device performing a particular function according to its equipped program, such as a home appliance, an electronic scheduler, a portable multimedia player, a mobile communication terminal, a tablet personal computer (PC), a video/sound device, a desktop PC or laptop computer, a navigation for automobile, or the like. For example, the electronic devices may output stored information as voices or images. As electronic devices are highly integrated, and high-speed or high-volume wireless communication becomes commonplace, an electronic device, such as a mobile communication terminal, is recently being equipped with a function. For example, an electronic device comes with an integrated function, including an entertainment function, such as playing video games, a multimedia function, such as replaying music/videos, a communication and security function for mobile banking, and a scheduling or e-wallet function. These electronic devices have been downsized to be conveniently carried by users.

The above information is presented as background information only to assist with an understanding of the disclosure. No determination has been made, and no assertion is made, as to whether any of the above might be applicable as prior art with regard to the disclosure.

### (DISCLOSURE OF INVENTION]

### [SOLUTION TO PROBLEMS]

Aspects of the disclosure are to address at least the above-mentioned problems and/or disadvantages and to provide at least the advantages described below. Accordingly, an aspect of the disclosure is to provide to a housing and an electronic device including the same.

Additional aspects will be set forth in part in the description which follows and, in part, will be apparent from the description, or may be learned by practice of the presented embodiments.

In accordance with an aspect of the disclosure, an electronic device is provided. The electronic device includes a first housing and a second housing, wherein the first housing includes a rear plate including at least one first opening, a support bracket disposed adjacent to the rear plate and supporting the rear plate, and at least one rubber member disposed to penetrate the first opening of the rear plate, and wherein the support bracket includes a fastening part disposed adjacent to the at least one rubber member, at least one fixing part extending from one side of the fastening part, a supporting part extending from the at least one fixing part and at least partially disposed to face the rear plate, and at least one rotating part connected to the supporting part and rotatably coupled to the supporting part.

In accordance with another aspect of the disclosure, an electronic device is provided. The electronic device includes a first housing, a second housing, and a hinge including at least one hinge screw and rotatably coupling the first housing and the second housing, wherein the first housing includes a rear plate including at least one first opening, a support bracket disposed adjacent to the rear plate to support the rear plate, and at least one rubber member disposed to penetrate the first opening of the rear plate, and wherein the support bracket includes a fastening part configured to receive the hinge screw and disposed adjacent to the at least one rubber member, at least one fixing part extending from one side of the fastening part, a supporting part extending from the at least one fixing part and at least partially disposed to face the rear plate, and at least one rotating part connected to the supporting part and rotatably coupled to the supporting part.

Other aspects, advantages, and salient features of the disclosure will become apparent to those skilled in the art from the following detailed description, which, taken in conjunction with the annexed drawings, discloses various embodiments of the disclosure.

### [BRIEF DESCRIPTION OF DRAWINGS]

The above and other aspects, features, and advantages of certain embodiments of the disclosure will be more apparent from the following description taken in conjunction with the accompanying drawings, in which:
FIG. 1 is a block diagram illustrating an electronic device in a network environment according to an embodiment of the disclosure;
FIG. 2 is a perspective view illustrating an electronic device in an unfolded state according to an embodiment of the disclosure;
FIG. 3 is a perspective view illustrating an electronic device in a folded state according to an embodiment of the disclosure;
FIG. 4 is a view illustrating a first housing with a rubber member excluded, as viewed from the rear, according to an embodiment of the disclosure;
FIG. 5 is an exploded perspective view illustrating a first housing according to an embodiment of the disclosure;
FIG. 6 is a view illustrating a first housing with a rubber member removed, as viewed from the rear, according to an embodiment of the disclosure;
FIG. 7 is a cross-sectional view illustrating the first housing of FIG. 6, taken along line A-A' according to an embodiment of the disclosure;
FIG. 8 is a view illustrating a rubber member according to an embodiment of the disclosure;
FIG. 9 is a view illustrating a hinge according to an embodiment of the disclosure;
FIGS. 10 and 11 are views illustrating a state in which a hinge is coupled to a housing according to various embodiments of the disclosure;
FIG. 12 is a front view illustrating a first housing with a rubber member removed in a first state according to an embodiment of the disclosure;
FIG. 13 is a perspective view illustrating a first housing with a rubber member removed in a first state according to an embodiment of the disclosure;
FIG. 14 is a cross-sectional view illustrating a first housing with a rubber member removed in a first state according to an embodiment of the disclosure;
FIG. 15 is a front view illustrating a first housing with a rubber member removed in a second state according to an embodiment of the disclosure;
FIGS. 16 and 17 are perspective views illustrating a first housing with a rubber member removed in a second state according to various embodiments of the disclosure;
FIG. 18 is a cross-sectional view illustrating a first housing with a rubber member removed in a second state according to an embodiment of the disclosure;
FIG. 19 is a view illustrating a support bracket including a protrusion in a second state according to an embodiment of the disclosure;
FIGS. 20A, 20B, and 20C illustrate a rotating part including a protrusion at various angles according to various embodiments of the disclosure; and
FIGS. 21A, 21B, and 21C are views illustrating a shape of a protrusion according to various embodiments of the disclosure.

Throughout the drawings, it should be noted that like reference numbers are used to depict the same or similar elements, features, and structures.

### [MODE FOR THE INVENTION]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The electronic device according to embodiments of the disclosure may be one type of device. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments of the disclosure, and should be understood to include a modification, equivalent, or substitute of the embodiment. With regard to the description of the drawings, similar reference numerals may be used to refer to similar or related elements. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

According to an embodiment of the disclosure, each component (e.g., a module or a program) of the above-described components may include a single entity or multiple entities. Some of the plurality of entities may be separately disposed in different components. According to an embodiment of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

It should be appreciated that the blocks in each flowchart and combinations of the flowcharts may be performed by one or more computer programs which include computer-executable instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g., a central processing unit (CPU)), a communication processor (CP, e.g., a modem), a graphical processing unit (GPU), a neural processing unit (NPU) (e.g., an artificial intelligence (AI) chip), a wireless-fidelity (Wi-Fi) chip, a Bluetooth^{™} chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, a microprocessor unit (MPU), a system on chip (SoC), an IC, or the like.

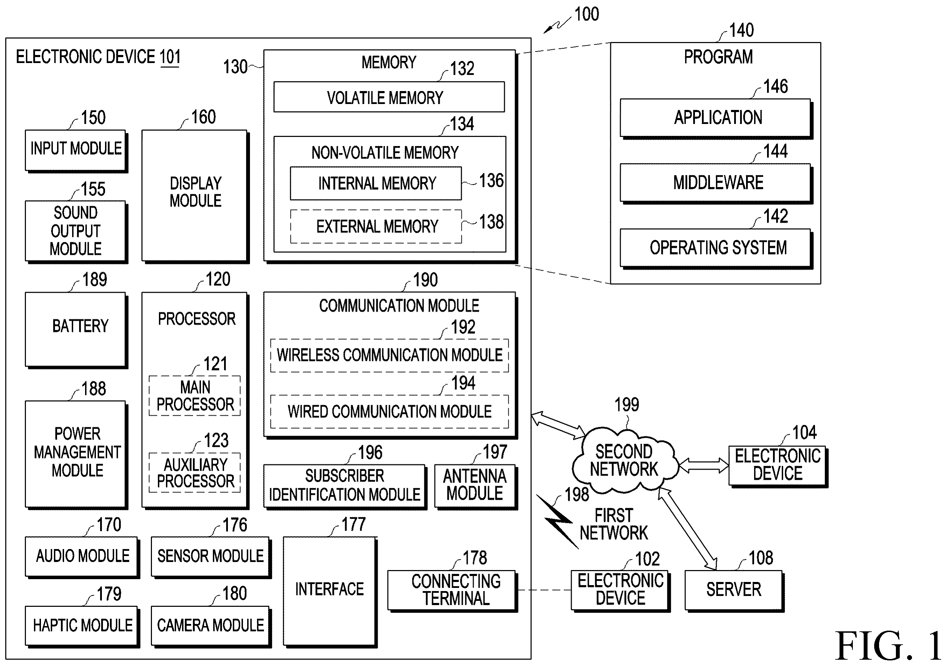

FIG. 1 is a block diagram illustrating an electronic device in a network environment according to an embodiment of the disclosure.

Referring to FIG. 1, an electronic device 101 in a network environment 100 may communicate with an external electronic device 102 via a first network 198 (e.g., a short-range wireless communication network), or an external electronic device 104 or a server 108 via a second network 199 (e.g., a long-range wireless communication network). According to an embodiment of the disclosure, the electronic device 101 may communicate with the external electronic device 104 via the server 108. According to an embodiment of the disclosure, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment of the disclosure, at least one (e.g., the connecting terminal 178) of the components may be omitted from the electronic device 101, or one or more other components may be added in the electronic device 101. In an embodiment of the disclosure, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform data processing or computation. According to an embodiment of the disclosure, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment of the disclosure, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment of the disclosure, the auxiliary processor 123 (e.g., an image signal processor or a communication processor) may be implemented as part of another component (e.g., the camera module 180 or the communication module 190) functionally related to the auxiliary processor 123. According to an embodiment of the disclosure, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store a piece of data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include internal memory 136 and external memory 138.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment of the disclosure, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment of the disclosure, the display module 160 may include a touch sensor configured to detect a touch, or a pressure sensor configured to measure the intensity of a force generated by the touch.

The audio module 170 may convert a sound into an electrical signal and vice versa. According to an embodiment of the disclosure, the audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment of the disclosure, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment of the disclosure, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment of the disclosure, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment of the disclosure, the haptic module 179 may include, for example, a motor, a piezoelectric element, or an electric stimulator.

The camera module 180 may capture a still image or moving images. According to an embodiment of the disclosure, the camera module 180 may include one or more lenses, image sensors, image signal processors, or flashes.

The power management module 188 may manage power supplied to the electronic device 101. According to an embodiment of the disclosure, the power management module 188 may be implemented as at least part of, for example, a power management integrated circuit (PMIC).

The battery 189 may supply power to at least one component of the electronic device 101. According to an embodiment of the disclosure, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment of the disclosure, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a fifth generation (5G) network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support a requirement specified in the electronic device 101, an external electronic device (e.g., the external electronic device 104), or a network system (e.g., the second network 199). According to an embodiment of the disclosure, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment of the disclosure, the antenna module 197 may include one antenna including a radiator formed of a conductor or conductive pattern formed on a substrate (e.g., a printed circuit board (PCB)). According to an embodiment of the disclosure, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment of the disclosure, other parts (e.g., radio frequency integrated circuit (RFIC)) than the radiator may be further formed as part of the antenna module 197.

According to an embodiment of the disclosure, the antenna module 197 may form a mmWave antenna module. According to an embodiment of the disclosure, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment of the disclosure, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment of the disclosure, all or some of operations to be executed at the electronic device 101 may be executed at one or more of the external electronic devices 102 or 104, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment of the disclosure, the external electronic device 104 may include an Internet-of-things (IoT) device. The server 108 may be an intelligent server using machine learning and/or a neural network. According to an embodiment of the disclosure, the external electronic device 104 or the server 108 may be included in the second network 199. The electronic device 101 may be applied to intelligent services (e.g., a smart home, a smart city, a smart car, or healthcare) based on 5G communication technology or IoT-related technology.

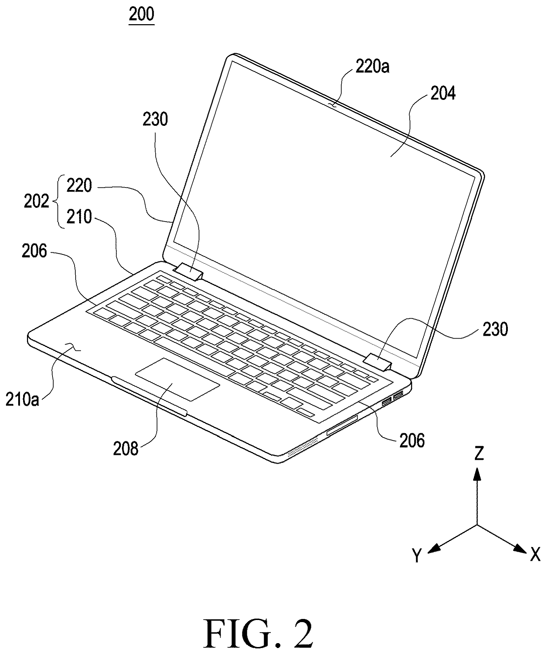

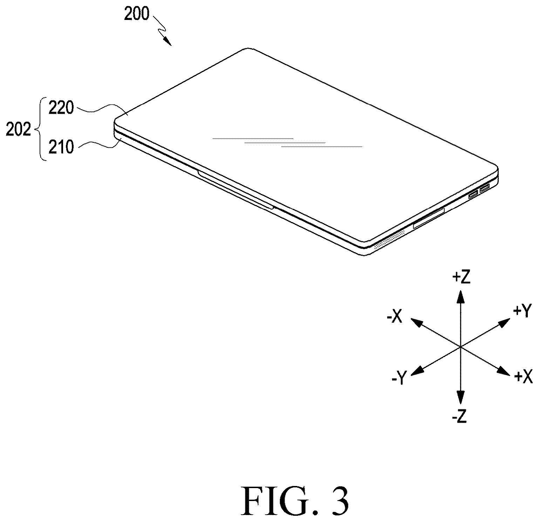

FIG. 2 is a perspective view illustrating an electronic device in an unfolded state according to an embodiment of the disclosure. FIG. 3 is a perspective view illustrating an electronic device in a folded state according to an embodiment of the disclosure.

Referring to FIGS. 2 and 3, an electronic device 200 may include a housing 202 and a display 204. According to an embodiment of the disclosure, the electronic device 200 may be a laptop computer, a notebook computer, or a portable terminal. The configuration of the electronic device 200 of FIGS. 2 and 3 may be identical in whole or part to the configuration of the electronic device 101 of FIG. 1.

According to an embodiment of the disclosure, the housing 202 may form at least a portion of the exterior of the electronic device 200 or support a component (e.g., the display 204) of the electronic device 200. For example, the housing 202 may receive at least one of the display 204, an input device 206, or a touch pad 208.

According to an embodiment of the disclosure, the electronic device 200 may be opened or closed. For example, the housing 202 may include a first housing 210 and a second housing 220 configured to be rotatable with respect to the first housing 210. According to an embodiment of the disclosure, the electronic device 200 may include at least one hinge module 230 connected to the first housing 210 and the second housing 220.

According to an embodiment of the disclosure, the first housing 210 may be configured to rotate in a designated angle range (e.g., 0 degrees to 360 degrees) with respect to the second housing 220 using the at least one hinge module 230. For example, the electronic device 200 may operate in a first state (e.g., FIG. 2) (clamshell mode). In the first state, the angle between the first front surface 210a of the first housing 210 and the second front surface 220a of the second housing 220 may be about 90 degrees to 130 degrees. According to an embodiment of the disclosure, the electronic device 200 may operate in a second state (e.g., FIG. 3) (tablet mode). In the second state, the angle between the first housing 210 and the second housing 220 may be about 360 degrees. According to an embodiment of the disclosure, the rotation of the first housing 210 with respect to the second housing 220 may be interpreted as the rotation of the second housing 220 with respect to the first housing 210.

According to an embodiment of the disclosure, the housing 202 may be formed of a metallic material or a non-metallic material having a selected magnitude of rigidity. According to an embodiment of the disclosure, at least a portion of the electronic device 200 formed of the metallic material may provide a ground plane and may be electrically connected to a ground line formed on a printed circuit board (not shown). For example, the housing 202 may be electrically connected to the printed circuit board through a capacitive component.

According to an embodiment of the disclosure, the display 204 may be a flexible display in which at least a partial area thereof may be deformed into a flat surface and/or a curved surface. For example, the display 204 may be a foldable or rollable display. The configuration of the display 204 may be identical in whole or part to the configuration of the display module 160 of FIG. 1. According to an embodiment of the disclosure, the display 204 may be received in the second housing 220. For example, at least a portion of the display 204 may be disposed in the second housing 220. According to an embodiment of the disclosure, at least a portion of the display 204 may be visually exposed to the outside of the electronic device 200. According to an embodiment of the disclosure, the second housing 220 may be interpreted as a display unit.

According to an embodiment of the disclosure, the display 204 may be coupled with or disposed adjacent to a touch detection circuit, a pressure sensor capable of measuring the strength (pressure) of touches, and/or a digitizer for detecting a magnetic field-type stylus pen.

According to an embodiment of the disclosure, the electronic device 200 may include the input device 206 capable of detecting the user input (e.g., pressure). According to an embodiment of the disclosure, the input device 206 may be received in the first housing 210. For example, the input device 206 may be disposed on the first housing 210. According to an embodiment of the disclosure, in the state in which the electronic device 200 is closed, at least a portion of the input device 206 may face at least a portion of the display 204. The configuration of the input device 206 of FIG. 2 may be identical in whole or part to the configuration of the input module 150 of FIG. 1. For example, the input device 206 may be a keyboard. According to an embodiment of the disclosure, the first housing 210 may be interpreted as a main body part.

According to an embodiment of the disclosure, the electronic device 200 may include the touch pad 208 configured to detect or receive the user input. According to an embodiment of the disclosure, the touch pad 208 may include a capacitive touch sensor, a touch sensor based on resistance detection, an optical touch sensor, or a surface sound wave touch sensor. For example, the touch pad 208 may detect current, pressure, light, and/or vibration due to an input applied by the user to the touch pad 208, and the processor (e.g., the processor 120 of FIG. 1) and/or the touch pad 208 may determine the user input based on the detected change in current, pressure, light, and/or vibration. According to an embodiment of the disclosure, the touch pad 208 may include a touch display. For example, the touch pad 208 may include a resistive touch screen, a capacitive touch screen, and/or an infrared touch screen.

According to an embodiment of the disclosure, the processor (e.g., the processor 120 of FIG. 1) and/or the touch pad 208 may determine the input position (e.g., XY coordinates) of the user. According to an embodiment of the disclosure, the touch pad 208 may detect a pressure on the touch pad 208. For example, the touch pad 208 may detect a force in the thickness direction (e.g., the Z-axis direction) using a switch member (not shown) and at least one force sensor (not shown). According to an embodiment of the disclosure, the touch pad 208 may detect an external object when the external object (e.g., the user's finger or stylus) directly contacts or approaches the surface of the touch pad 208.

According to an embodiment of the disclosure, the touch pad 208 may be received in the first housing 210. For example, the touch pad 208 may be connected to the first housing 210, and at least a portion thereof may be exposed to the outside of the first housing 210.

According to an embodiment of the disclosure, the touch pad 208 may be adjacent to the input device 206. According to an embodiment of the disclosure, in the state in which the electronic device 200 is closed, at least a portion of the touch pad 208 may face the display 204. The configuration of the touch pad 208 may be identical in whole or part to the configuration of the input module 150 of FIG. 1.

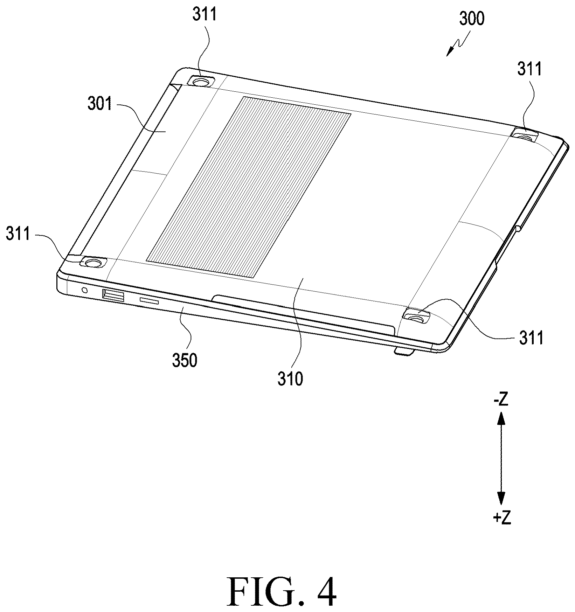

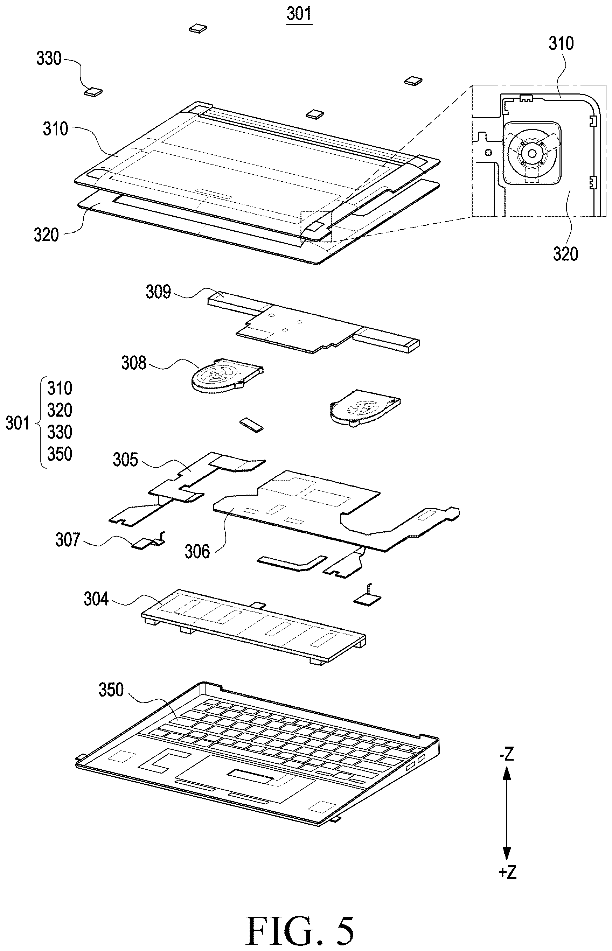

FIG. 4 is a view illustrating a first housing with a rubber member excluded, as viewed from the rear, according to an embodiment of the disclosure. FIG. 5 is an exploded perspective view illustrating a first housing according to an embodiment of the disclosure.

Referring to FIGS. 4 and 5, an electronic device 300 (e.g., the electronic device 200 of FIG. 3) according to an embodiment may include a first housing 301, a second housing 302 configured to rotate with respect to the first housing 301, and a hinge 303 configured to rotatably couple the first housing 301 and the second housing 302. The first housing 301 may include a front plate 350, a rear plate 310, a support bracket 320, and a rubber member 330. The first housing 301 may include various components (e.g., a main printed circuit board 306, a sub printed circuit board 305, a keyboard module 304, a speaker 307, a fan 308, and a heat sink 309). The configuration of the electronic device 300 of FIGS. 4 and 5 may be identical in whole or part to the configuration of the electronic device 200 of FIGS. 2 and 3. The structure of FIGS. 4 and 5 may be selectively combinable with the structures of FIGS. 2 and 3.

According to an embodiment of the disclosure, the first housing 301 may include a rear plate 310. According to an embodiment of the disclosure, the rear plate 310 may be substantially opaque. The rear plate 310 may be formed of, e.g., laminated or colored glass, ceramic, polymer, metal (e.g., aluminum, stainless steel (STS), or magnesium), or a combination of at least two thereof. According to an embodiment of the disclosure, the rear plate 310 may include a plurality of first openings 311. For example, referring to FIG. 4, about four first openings 311 may be included. For example, a plurality of first openings 311 may be disposed in an edge area of the rear plate 310. The plurality of first openings 311 may be configured so that the rubber member 330 passes therethrough.

According to an embodiment of the disclosure, the first housing 301 may include a support bracket 320. The support bracket 320 may be a component that is disposed adjacent to the rear plate 310 and may support the rear plate 310. For example, the rear plate 310 may be disposed on the support bracket 320. The support bracket 320 may face one surface of the rear plate 310 facing in the front direction (e.g., the +Z direction of FIG. 4). A specific configuration of the support bracket 320 is described below.

According to an embodiment of the disclosure, the first housing 301 may include at least one rubber member 330. The rubber member 330 may be a component for preventing the rear plate 310 from slipping with respect to a reference surface when the electronic device 300 is placed on the reference surface, and for providing an empty space between the first housing 301 and the reference surface so that air may flow between the first housing 301 and the reference surface. According to an embodiment of the disclosure, the plurality of rubber members 330 may be disposed to penetrate the plurality of first openings 311 of the rear plate 310. According to an embodiment of the disclosure, the plurality of rubber members 330 may be configured to protrude further than the rear plate 310 of the first housing 301 in a rear direction (e.g., the -Z direction of FIG. 4). For example, the size and shape of the rubber member 330 may substantially correspond to the size and shape of the first opening 311. For example, referring to FIGS. 4 and 5, the electronic device 300 may include four rubber members 330.

According to an embodiment of the disclosure, the first housing 301 may include a front plate 350. According to an embodiment of the disclosure, the front plate 350 may contact one surface of the rear plate 310. According to an embodiment of the disclosure, the front plate 350 may be substantially opaque. The front plate 350 may be formed of, e.g., laminated or colored glass, ceramic, polymer, metal (e.g., aluminum, stainless steel (STS), or magnesium), or a combination of at least two thereof.

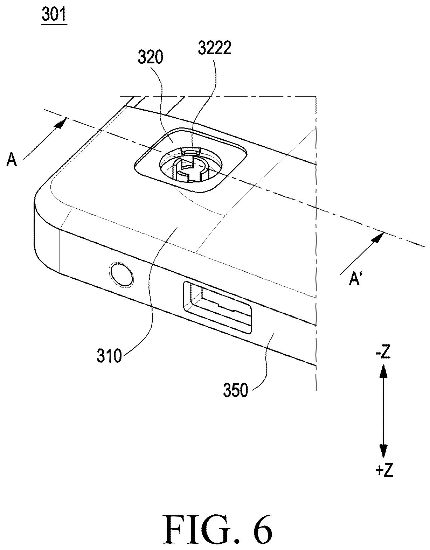

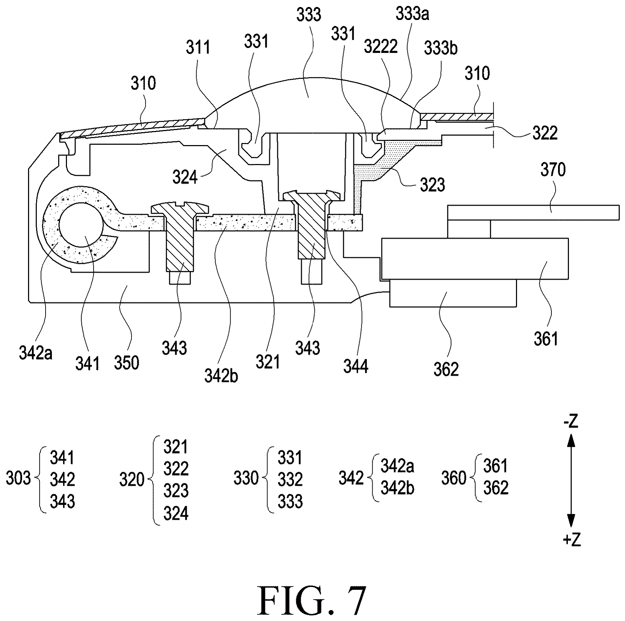

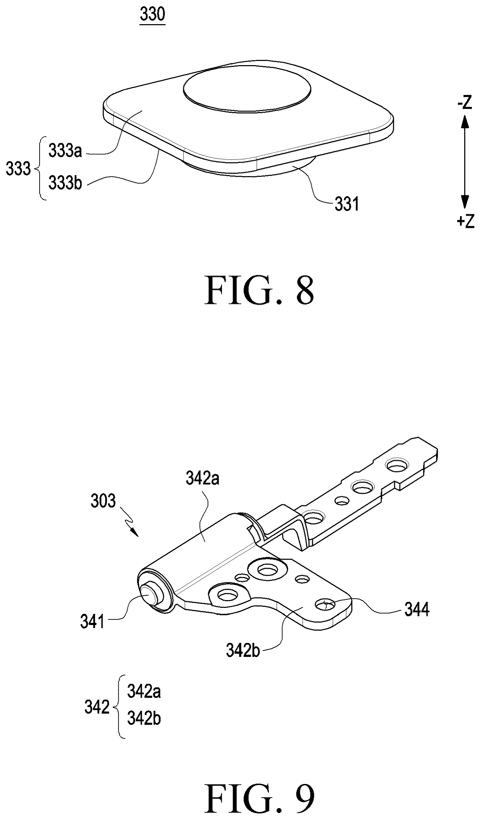

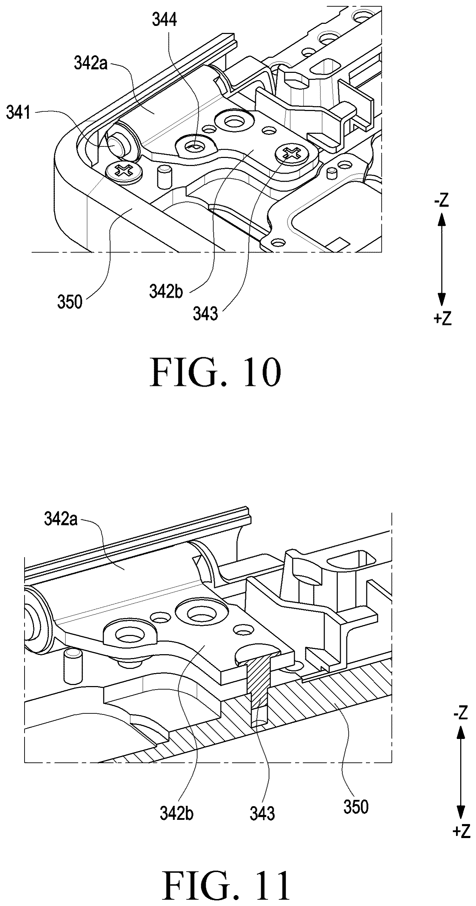

FIG. 6 is a view illustrating a first housing with a rubber member removed, as viewed from the rear, according to an embodiment of the disclosure. FIG. 7 is a cross-sectional view illustrating the first housing of FIG. 6, taken along line A-A' according to an embodiment of the disclosure. FIG. 8 is a view illustrating a rubber member according to an embodiment of the disclosure. FIG. 9 is a view illustrating a hinge according to an embodiment of the disclosure. FIGS. 10 and 11 are views illustrating a state in which a hinge is coupled to a housing according to various embodiments of the disclosure.

Referring to FIGS. 6 to 11, an electronic device 300 (e.g., the electronic device 200 of FIG. 3) according to an embodiment may include a first housing 301, a second housing 302 configured to rotate with respect to the first housing 301, and a hinge 303 for rotatably coupling the first housing 301 and the second housing 302. The first housing 301 may include a front plate 350, a rear plate 310, a support bracket 320, and a rubber member 330. Various components (e.g., a sub printed circuit board 370 (e.g., the sub printed circuit board 305 of FIG. 5) and the keyboard module 360 (e.g., the keyboard module 304 of FIG. 5) may be included in the first housing 301. The configuration of the electronic device 300 of FIGS. 6 to 11 may be identical in whole or part to the configuration of the electronic device 300 of FIGS. 4 and 5. The structure of FIGS. 6 to 11 may be selectively combinable with the structures of FIGS. 4 and 5.

According to an embodiment of the disclosure, the hinge 303 may be a component for rotatably couple the first housing 301 and the second housing 302. At least a portion of the hinge 303 may be disposed in the first housing 301. The hinge 303 may be disposed between the front plate 350 and the rear plate 310 of the first housing 301. According to an embodiment of the disclosure, the hinge 303 may include a hinge shaft 341, a hinge plate 342, and at least one hinge screw 343. The hinge plate 342 may include a first portion 342a configured to surround the hinge shaft 341 and a second portion 342b extending from the first portion 342a and being a flat plate. The second portion 342b may be disposed between the front plate 350 and the rear plate 310. The second portion 342b may be disposed between the front plate 350 and the support bracket 320. At least a portion of the front surface of the second portion 342b may contact the front plate 350, and at least a portion of the rear surface of the second portion 342b may contact the support bracket 320. The second portion 342b may include at least one second opening 344 formed to allow the at least one hinge screw 343 to be inserted thereinto. According to an embodiment of the disclosure, the at least one hinge screw 343 may be inserted into an opening formed in the support bracket 320, the hinge plate 342, and the front plate 350 to fix the hinge 303 not to move, and may simultaneously fix the positions of the support bracket 320, the hinge plate 342, and the front plate 350.

According to an embodiment of the disclosure, the rubber member 330 may include a body portion 333 and a hook 331 protruding from the body portion 333 in the front direction (e.g., the +Z direction of FIG. 7). The body portion 333 may include a first surface 333a facing in the rear direction (e.g., the -Z direction of FIG. 7) and a second surface 333b facing in the front direction (e.g., the +Z direction of FIG. 7). The central portion of the first surface 333a may be formed to further protrude in the rear direction (e.g., the -Z direction of FIG. 7) than the edge portion. The hook 331 may be formed to protrude from the second surface 333b of the body portion 333 in the front direction (e.g., the +Z direction of FIG. 7). According to an embodiment of the disclosure, the body portion 333 of the rubber member 330 may be seated on the support bracket 320 through the first opening 311 formed in the rear plate 310. According to an embodiment of the disclosure, the hook 331 of the rubber member 330 may be coupled to the support bracket 320 to fix the position of the rubber member 330.

According to an embodiment of the disclosure, the support bracket 320 may fix the positions of the rear plate 310 and the front plate 350, guide insertion of the hinge screw 343, and fix the position of the rubber member 330. According to an embodiment of the disclosure, the support bracket 320 may include a fastening part 321, a fixing part 324, a supporting part 322, and a rotating part 323. The fastening part 321, the fixing part 324, the supporting part 322, and the rotating part 323 constituting the support bracket 320 may be monolithic.

According to an embodiment of the disclosure, the electronic device 300 may further include a keyboard module 360 disposed to pass through the front plate 350. At least a portion of the keyboard module 360 may be exposed to the outside of the electronic device. For example, at least a portion of a keycap 362 of the keyboard module 360 may be exposed to the outside of the electronic device, which may be a component that the user's hand may contact. A keyboard body 361 receiving the keycap 362 may be disposed in the rear direction (e.g., the -Z direction) of the keycap 362. The keyboard body 361 may include components, such as, e.g., a membrane, a metal plate, a light guide plate (LGP) and a light emitting diode (LED). The configuration of the keyboard module 360 of FIG. 7 may be identical in whole or part to the configuration of the keyboard module 304 of FIG. 5 and the input device 206 of FIG. 2. According to an embodiment of the disclosure, the keyboard module 304 may be electrically connected to the printed circuit board 370 (e.g., a sub printed circuit board).

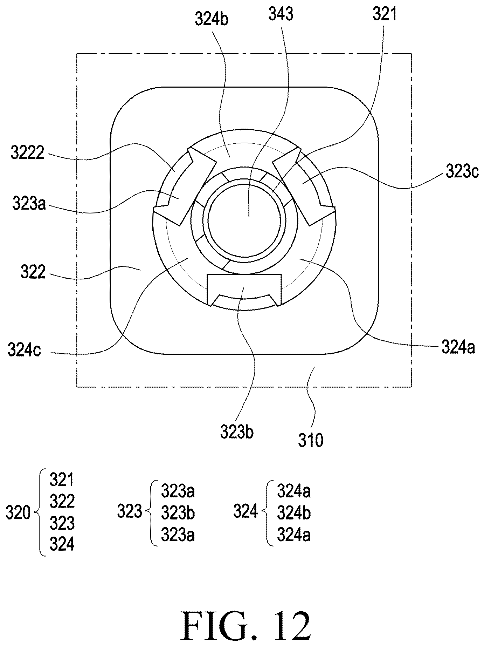

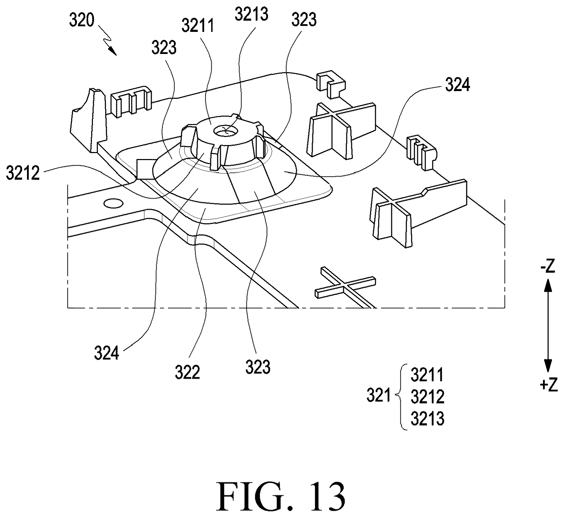

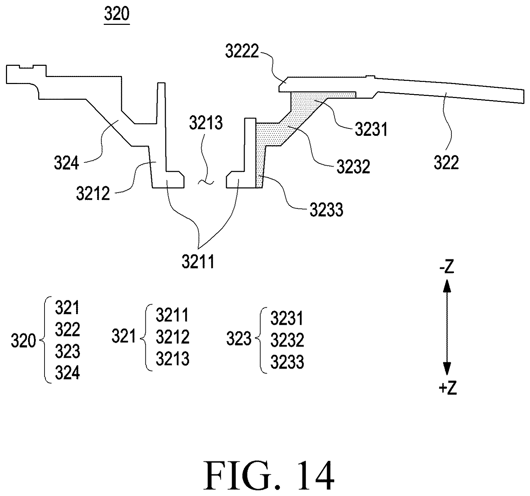

FIG. 12 is a front view illustrating a first housing 301 with a rubber member 330 removed in a first state according to an embodiment of the disclosure. FIG. 13 is a perspective view illustrating a first housing 301 with a rubber member 330 removed in a first state according to an embodiment of the disclosure. FIG. 14 is a cross-sectional view illustrating a first housing 301 with a rubber member 330 removed in a first state according to an embodiment of the disclosure.

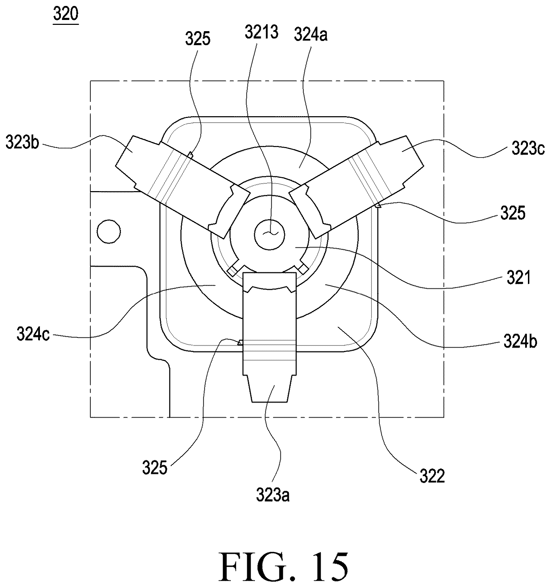

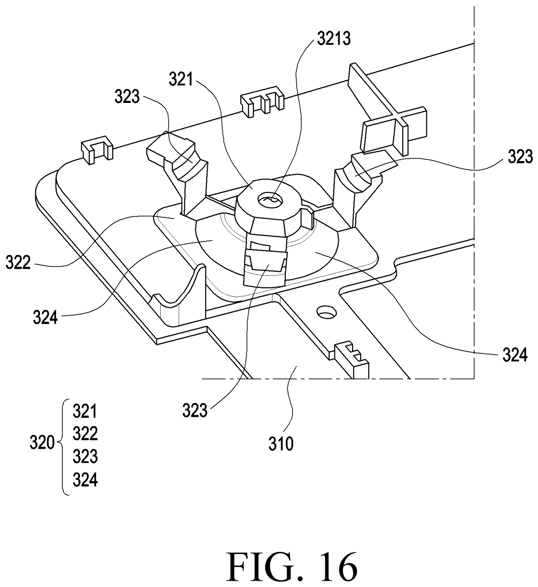

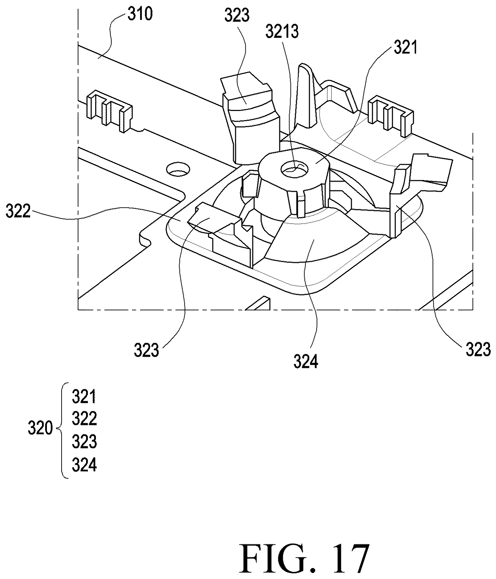

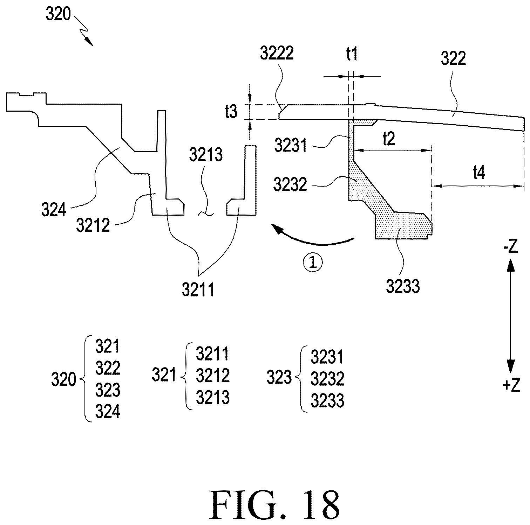

FIG. 15 is a front view illustrating a first housing 301 with a rubber member 330 removed in a second state according to an embodiment of the disclosure. FIGS. 16 and 17 are perspective views illustrating a first housing 301 with a rubber member 330 removed in a second state according to various embodiments of the disclosure. FIG. 18 is a cross-sectional view illustrating a first housing 301 with a rubber member 330 removed in a second state according to an embodiment of the disclosure.

Referring to FIGS. 12 to 18, the first housing 301 according to an embodiment may include a front plate 350, a rear plate 310, a support bracket 320, and a rubber member 330. The configuration of the electronic device 300 of FIGS. 12 to 18 may be identical in whole or part to the configuration of the electronic device 300 of FIGS. 6 to 11. The structure of FIGS. 12 to 18 may be selectively combinable with the structures of FIGS. 6 to 11.

According to an embodiment of the disclosure, the fastening part 321 may guide insertion of the hinge screw 343. According to an embodiment of the disclosure, the fastening part 321 may include a bottom surface 3211 including a third opening 3213, and a side surface 3212 extending vertically from the bottom surface 3211. For example, the side surface 3212 may include a curved surface corresponding to the shape of the bottom surface 3211. For example, the fastening part 321 may have a penetrating shape. According to an embodiment of the disclosure, the fastening part 321 may be positioned on the front plate 350. According to an embodiment of the disclosure, the fastening part 321 may be positioned on the hinge plate 342. According to an embodiment of the disclosure, the hinge screw 343 may be inserted through the third opening 3213 of the bottom surface 3211 of the fastening part 321. According to an embodiment of the disclosure, the fastening part 321 may be disposed adjacent to the rubber member 330. The side surface 3212 of the fastening part 321 may contact the second surface 333b of the body portion 333 of the rubber member 330. For example, the side surface 3212 of the fastening part 321 may be positioned closer to the central portion than the hook 331 of the rubber member 330. The side surface 3212 of the fastening part 321 may be formed to have a smaller diameter than the hook 331 of the rubber member 330. According to an embodiment of the disclosure, the side surface 3212 may be connected to the fixing part 324 and/or the rotating part 323.

According to an embodiment of the disclosure, at least one fixing part 324 may extend from one side of the fastening part 321. The fixing part 324 may extend from the side surface 3212 of the fastening part 321 at a designated angle to be connected to the supporting part 322. The fixing part 324 may be fixed without changing in position corresponding to the rotating part 323 described below. According to an embodiment of the disclosure, the support bracket 320 may include a plurality of fixing parts 324. For example, the support bracket 320 may include three fixing parts 324. The number of fixing parts 324 corresponds to the number of rotating parts 323 to be described below, and various design changes may be made according to embodiments without limitations to the number.

According to an embodiment of the disclosure, the supporting part 322 may extend from the fixing part 324 and may be disposed so that at least a portion thereof faces the rear plate 310. It supports the rear plate 310 and may have a flat shape corresponding to the rear plate 310. According to an embodiment of the disclosure, at least a portion of the supporting part 322 may face the rear plate 310, and at least a portion of the supporting part 322 may face the rubber member 330.

According to an embodiment of the disclosure, the supporting part 322 may include a protruding part 3222 configured to be coupled to the hook 331 of the rubber member 330. The protruding part 3222 may be formed to protrude toward the hook 331 in a size corresponding to the hook 331 of the rubber member 330. The hook 331 of the rubber member 330 and the protruding part 3222 of the supporting part 322 may be coupled to each other to fix the position of the rubber member 330.

According to an embodiment of the disclosure, the rubber member 330 may be disposed at a position corresponding to the portion where the hinge screw 343 is disposed in the Z-axis direction. In other words, the Z-axis position of the rubber member 330 and the Z-axis position of the hinge screw 343 may correspond to each other. The hinge screw 343 is not visible from the exterior of the electronic device 300 by the rubber member 330, and thus may be aesthetically good.

According to an embodiment of the disclosure, the rotating part 323 may be connected to the supporting part 322 and may be configured to be rotatable with respect to the supporting part 322.

According to an embodiment of the disclosure, the rotating part 323 may be rotated in a first rotation direction (e.g., a counterclockwise direction) or a second rotation direction (e.g., a clockwise direction) opposite thereto with respect to an end portion connected to the supporting part 322. For example, when referring to FIG. 18, it may be rotated in the second rotation direction ① (e.g., clockwise direction). For example, the rotating part 323 may rotate at a designated angle. For example, the rotating part 323 may be folded by rotating 90 degrees. However, the assembly angle may be smaller than or larger than 90 degrees depending on the structural situation and the embodiment.

According to an embodiment of the disclosure, the support bracket 320 may be changed into either a first state in which the rotating part 323 rotates in the first rotation direction with respect to the supporting part 322 so that the rotating part 323 and the supporting part 322 are folded, or a second state in which the rotating part 323 rotates in the second rotation direction with respect to the supporting part 322 so that the rotating part 323 and the supporting part 322 are unfolded. According to an embodiment of the disclosure, the support bracket 320 may be manufactured in the second state and may be folded to be coupled to the electronic device 300 in the first state.

According to an embodiment of the disclosure, the rotating part 323 may include a first area 3231 having an end portion connected to the supporting part 322, a second area 3232 extending from the first area 3231 at a designated angle, and a third area 3233 extending from the second area 3232 and disposed perpendicular to the first area 3231. According to an embodiment of the disclosure, the rotating part 323 may substantially correspond to the fixing part 324 in shape and structure. According to an embodiment of the disclosure, in the first state, the rotating part 323 may substantially correspond to the fixing part 324.

According to an embodiment of the disclosure, in the first state, one surface of the first area 3231 may be configured to contact the supporting part 322. According to an embodiment of the disclosure, one surface of the third area 3233 may be configured to contact the fastening part 321. As the third area 3233 and the fastening part 321 are connected to each other to allow one surface of the third area 3233 to contact the fastening part 321, no hole connected to the outside of the electronic device 300 is formed, thereby preventing or reducing a fire due to heat generation. For example, the hole connected to the outside of the electronic device 300 may be about 1 mm or less.

According to an embodiment of the disclosure, in the first state, another surface of the third area 3233 may be configured to contact the hinge plate 342. The fixing force of the rotating part 323 may be increased by allowing the third area 3233 of the rotating part 323 to contact the hinge plate 342. For example, in the state in which the first housing 301 and the second housing 302 of the electronic device 300 are rotated to be unfolded, a force to lift in the front direction (e.g., +Z direction) may be generated at the hinge plate 342 disposed in the first housing 301, preventing the rotating part 323 from spreading.

According to an embodiment of the disclosure, a plurality of rotating parts 323 and a plurality of fixing parts 324 may be alternately disposed with respect to the fastening part 321. For example, the plurality of rotating parts 323 may include a first rotating part 323a, a second rotating part 323b, and a third rotating part 323c disposed at regular intervals with respect to the fastening part 321. For example, the plurality of fixing parts 324 may include a first fixing part 324a disposed between the first rotating part 323a and the second rotating part 323b, a second fixing part 324b disposed between the second rotating part 323b and the third rotating part 323c, and a third fixing part 324c disposed between the third rotating part 323c and the first rotating part 323a.

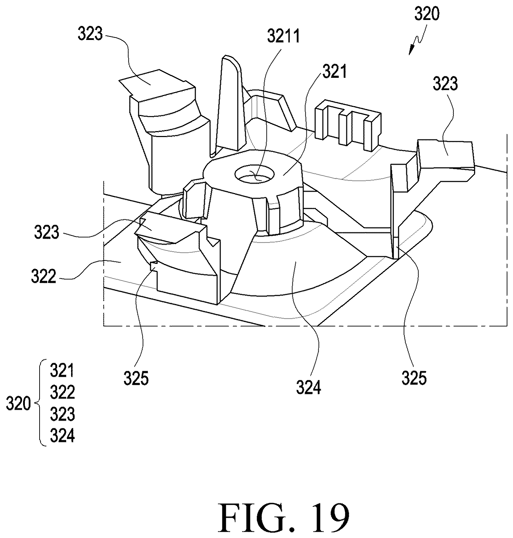

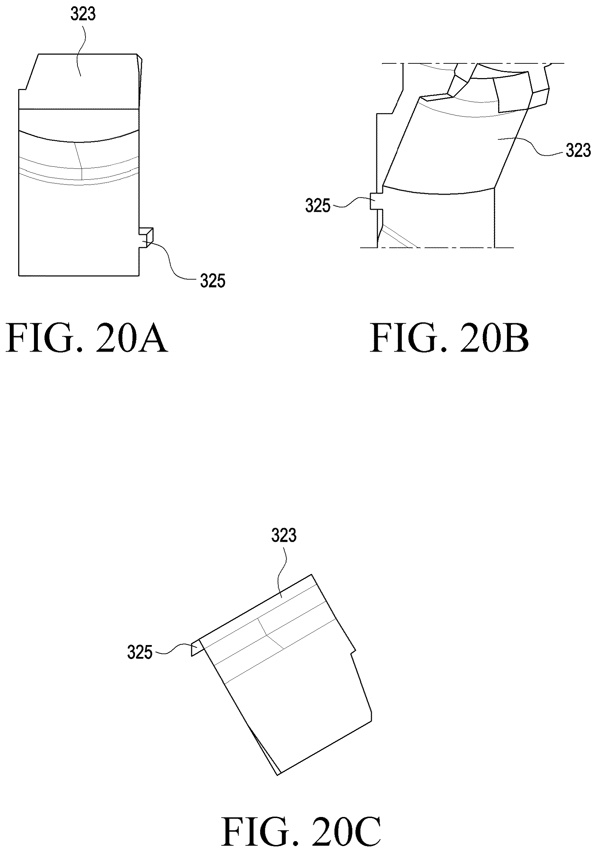

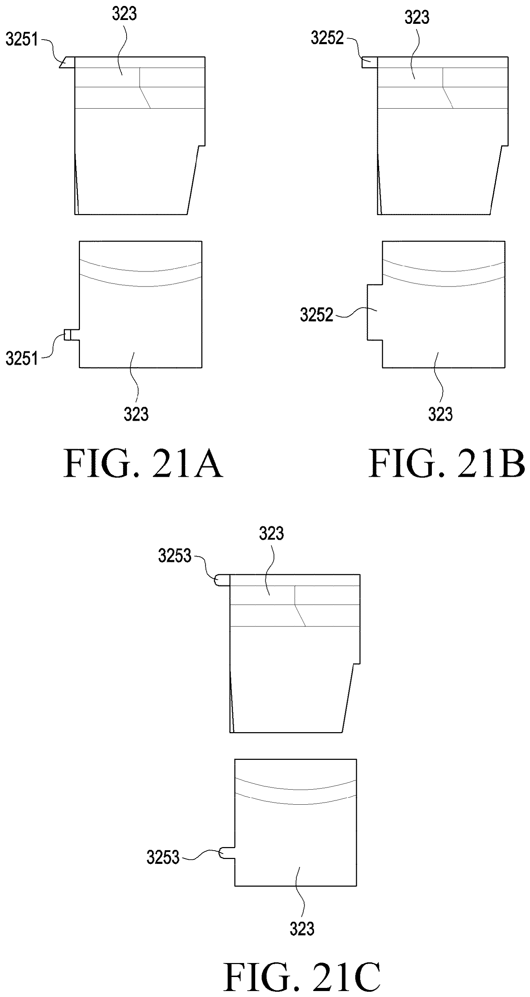

FIG. 19 is a view illustrating a support bracket including a protrusion in a second state according to an embodiment of the disclosure FIGS. 20A to 20C illustrate a rotating part including a protrusion at various angles according to various embodiments of the disclosure. FIGS. 21A to 21C are views illustrating a shape of a protrusion according to various embodiments of the disclosure.

Referring to FIGS. 19, 20A, 20B, 20C, 21A, 21B, and 21C, a support bracket 320 according to an embodiment may include a rotating part 323. The configuration of the support bracket 320 and the rotating part 323 of FIGS. 19, 20A, 20B, 20C, 21A, 21B, and 21C may be identical in whole or part to the configuration of the support bracket 320 and the rotating part 323 of FIGS. 6 to 18. The structure of FIGS. 19, 20A, 20B, 20C, 21A, 21B, and 21C may be selectively combined with the structure of FIGS. 6 to 18.

According to an embodiment of the disclosure, the rotating part 323 may include a protrusion 325 on one side surface thereof. For example, referring to the drawings, the protrusion 325 may be formed on the left surface 3212 of the rotating part 323. For example, the protrusion 325 may be formed on the left surface 3212 of the first area 3231 of the rotating part 323. According to an embodiment of the disclosure, one surface contacting the protrusion 325 of the fixing part 324 disposed adjacent to the rotating part 323 may include a recess (not shown) corresponding to the protrusion 325. For example, when the protrusion 325 is formed on the left surface 3212 of the rotating part 323, the protrusion 325 may be formed on the right surface 3212 of the fixing part 324. According to an embodiment of the disclosure, the protrusion 325 of the rotating part 323 and the recess (not shown) of the fixing part 324 may be coupled to fix the position of the rotating part 323 so that the rotating part 323 may be maintained in the first state.

Referring to FIG. 21A, a protrusion 3251 may have an obliquely cut shape (e.g., a tapered shape). Referring to FIG. 21B, a protrusion 3252 may have a bar shape. Referring to FIG. 21C, the protrusion 3253 may have a circular shape. However, the shape of the protrusion is not limited to the above embodiment and may be variously changed.

According to an embodiment of the disclosure, a bonding member (not shown) may be further included between the first area 3231 of the rotating part 323 and the supporting part 322. The bonding member (not shown) may attach the first area 3231 of the rotating part 323 and the supporting part 322 to fix the position of the rotating part 323 so that the rotating part 323 may be maintained in the first state. The bonding member may include at least one of a bond, a glue, an adhesive, or a double-sided tape, but is not limited to these.

An electronic device according to an embodiment of the disclosure may comprise a first housing, and a second housing. The first housing may include a rear plate 310 including at least one first opening 311, a support bracket 320 disposed adjacent to the rear plate to support the rear plate, and at least one rubber member 330 disposed to penetrate the first opening 311 of the rear plate. The support bracket may include a fastening part 321 disposed adjacent to the at least one rubber member, at least one fixing part 324 extending from one side of the fastening part, a supporting part 322 extending from the at least one fixing part and at least partially disposed to face the rear plate, and at least one rotating part connected to the supporting part and rotatably coupled to the supporting part.

According to an embodiment of the disclosure, the fastening part, the at least one fixing part, the supporting part, and the at least one rotating part may be integrally formed.

According to an embodiment of the disclosure, the fastening part, the at least one fixing part, the supporting part, and the at least one rotating part may be monolithic.

According to an embodiment of the disclosure, the at least one rotating part may include a first area 3231, an end of which connected to the supporting part, a second area 3232 extending from the first area at a specified angle, and a third area 3233 extending from the second area and substantially disposed perpendicular to the first area.

According to an embodiment of the disclosure, in a first state in which the at least one rotating part is rotated with respect to the supporting part so that the at least one rotating part and the supporting part are folded, one surface of the first area may be configured to contact the supporting part, and one surface of the third area may be configured to contact the fastening part.

According to an embodiment of the disclosure, the electronic device may further comprise a hinge 303 including at least one hinge screw 343 and rotatably coupling the first housing and the second housing. The support bracket may further include a front plate 350 configured to receive the hinge screw and at least partially contacting the rear plate. The hinge may be located between the front plate and the support bracket.

According to an embodiment of the disclosure, the hinge may include a hinge shaft 341 and a hinge plate 342. The hinge plate may include a first portion 342a configured to surround the hinge shaft and a second portion 342b extending from the first portion, disposed between the front plate and the fastening part, and configured to receive the hinge screw.

According to an embodiment of the disclosure, in the first state, one surface of the third area may be configured to contact the hinge plate.

According to an embodiment of the disclosure, the rubber member may include a hook 331 protruding in a front direction. The supporting part may include the protruding part 3222 configured to be coupled to the hook.

According to an embodiment of the disclosure, the at least one rotating part and the at least one fixing part may be alternately disposed with respect to the fastening part.

According to an embodiment of the disclosure, the at least one rotating part may include a protrusion 325 on a side surface, and the one surface of the at least one fixing part, contacting the protrusion 325, may include a recess corresponding to the protrusion 325.

According to an embodiment of the disclosure, the hook 331 of the at least one rubber member 330 may be coupled to the support bracket such that a position of the rubber member is fixed.

According to an embodiment of the disclosure, the at least one rotating part may include a first rotating part 323a, a second rotating part 323b, and a third rotating part 323c disposed at a regular interval with respect to the fastening part. The at least one fixing part may include a first fixing part 324a disposed between the first rotating part and the second rotating part, a second fixing part 324b disposed between the second rotating part and the third rotating part, and a third fixing part 324c disposed between the first rotating part and the third rotating part.

According to an embodiment of the disclosure, the electronic device may further comprise a bonding member disposed between the first area of the at least one rotating part and the supporting part and configured to attach the first area to the supporting part.

According to an embodiment of the disclosure, the electronic device may further comprise a keyboard module mounted through the front plate.

According to an embodiment of the disclosure, the electronic device may further comprise a printed circuit board disposed in the first housing and electrically connected to the keyboard module.

An electronic device according to an embodiment of the disclosure may comprise a first housing 301, a second housing 302, and a hinge 303 including at least one hinge screw 343 and rotatably coupling the first housing and the second housing. The first housing may include a rear plate 310 including at least one first opening 311, a support bracket 320 disposed adjacent to the rear plate to support the rear plate, and at least one rubber member 330 disposed to pass through the first opening 311 of the rear plate. The support bracket may include a fastening part 321 configured to receive the hinge screw and disposed adjacent to the at least one rubber member, at least one fixing part 324 extending from one side of the fastening part, a supporting part 322 extending from the at least one fixing part and at least partially disposed to face the rear plate, and the rotating part 323 connected to the supporting part and rotatably coupled to the supporting part.

According to an embodiment of the disclosure, the fastening part, the at least one fixing part, the supporting part, and the at least one rotating part may be integrally formed.

According to an embodiment of the disclosure, the fastening part, the at least one fixing part, the supporting part, and the at least one rotating part may be monolithic.

According to an embodiment of the disclosure, the at least one rotating part may include a first area 3231, an end of which is connected to the supporting part, a second area 3232 extending from the first area at a specified angle, and a third area 3233 extending from the second area and substantially disposed perpendicular to the first area.

According to an embodiment of the disclosure, in a first state in which the at least one rotating part and the supporting part are folded as the at least one rotating part rotates with respect to the supporting part in a first rotating, one surface of the first area may be configured to contact the supporting part, and one surface of the third area may be configured to contact the fastening part.

According to an embodiment of the disclosure, the at least one rubber member may include a hook 331 protruding in a front direction, and the supporting part may include the protruding part 3222 formed to correspond to the hook and configured to be coupled with the hook.

According to an embodiment of the disclosure, the support bracket may further include a front plate 350 configured to receive the hinge screw and at least partially contacting the rear plate, and the hinge may be located between the front plate and the support bracket.

According to an embodiment of the disclosure, the hinge may include a hinge shaft 341, and a hinge plate 342, and the hinge plate may include a first portion 342a configured to surround the hinge shaft, and a second portion 342b extending from the first portion, disposed between the front plate and the fastening part, and configured to receive the hinge screw. In the first state, another surface of the third area may be configured to contact the hinge plate.

An electronic device according to an embodiment of the disclosure may comprise a first housing and a second housing. The first housing may include a rear plate including at least one first opening, a support bracket disposed adjacent to the rear plate to support the rear plate, and at least one rubber member disposed to pass through the first opening of the rear plate. The support bracket may include a fastening part disposed adjacent to the rubber member, at least one fixing part extending from one side of the fastening part, a supporting part extending from the fixing part and having at least a portion disposed to face the rear plate, and at least one rotating part connected with the supporting part and coupled to be rotatable about the supporting part.

Technical objects to be achieved herein are not limited to the foregoing technical objects, and other technical objects not mentioned may be clearly understood by those skilled in the art from the following description.

In general, to prevent fire in the electronic device, the housing of the electronic device may be configured not to have a hole of a predetermined size (e.g., 1mm or less) formed in the housing. Thus, the number of assembly components of the housing increases, and due to a difficulty in pulling out from the molds, it may be hard to manufacture, into a single configuration, a structure for guiding the hinge screw and a structure for fastening the rubber member. Further, as the number of assembly components increases, material costs increase, and errors occur in the manufacturing process due to accumulated tolerances.

An electronic device according to an embodiment of the disclosure may include a support bracket for guiding a hinge screw for assembling and/or disassembling the electronic device and preventing the hinge screw from being visible from the outside for aesthetic purposes, and preventing a slip, thereby preventing fire, reducing assembly components to reduce material costs, and decreasing accumulated tolerances.

An electronic device 300 according to an embodiment of the disclosure may include a support bracket 320 in which a fastening part 321, a fixing part 324, a supporting part 322, and a rotating part 323 are monolithic. The support bracket may simultaneously perform the functions of fixing the positions of the rear plate 310 and the front plate 350, guiding insertion of the hinge screw 343, and fixing the position of the rubber member 330 by a single configuration.

It will be appreciated that various embodiments of the disclosure according to the claims and description in the specification can be realized in the form of hardware, software or a combination of hardware and software.

Any such software may be stored in non-transitory computer readable storage media. The non-transitory computer readable storage media store one or more computer programs (software modules), the one or more computer programs include computer-executable instructions that, when executed by one or more processors of an electronic device, cause the electronic device to perform a method of the disclosure.

Any such software may be stored in the form of volatile or non-volatile storage, such as, for example, a storage device like read only memory (ROM), whether erasable or rewritable or not, or in the form of memory, such as, for example, random access memory (RAM), memory chips, device or integrated circuits or on an optically or magnetically readable medium, such as, for example, a compact disk (CD), digital versatile disc (DVD), magnetic disk or magnetic tape or the like. It will be appreciated that the storage devices and storage media are various embodiments of non-transitory machine-readable storage that are suitable for storing a computer program or computer programs comprising instructions that, when executed, implement various embodiments of the disclosure. Accordingly, various embodiments provide a program comprising code for implementing apparatus or a method as claimed in any one of the claims of this specification and a non-transitory machine-readable storage storing such a program.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic device comprising:
a first housing; and
a second housing,
wherein the first housing includes:
a rear plate including at least one first opening,
a support bracket disposed adjacent to the rear plate and supporting the rear plate, and
at least one rubber member disposed to penetrate the first opening of the rear plate, and
wherein the support bracket includes:
a fastening part disposed adjacent to the at least one rubber member,
at least one fixing part extending from one side of the fastening part,
a supporting part extending from the at least one fixing part and at least partially disposed to face the rear plate, and
at least one rotating part connected to the supporting part and rotatably coupled to the supporting part.

2. The electronic device of claim 1, wherein the fastening part, the at least one fixing part, the supporting part, and the at least one rotating part are integrally formed.

3. The electronic device of claim 1, wherein the at least one rotating part includes:
a first area, an end of which is connected to the supporting part;
a second area extending from the first area at a specified angle; and
a third area extending from the second area and substantially disposed perpendicular to the first area.

4. The electronic device of claim 3,
wherein in a first state in which the at least one rotating part and the supporting part are folded as the at least one rotating part rotates with respect to the supporting part,
wherein one surface of the first area is configured to contact the supporting part, and
wherein one surface of the third area is configured to contact the fastening part.

5. The electronic device of claim 4, further comprising:
a hinge including at least one hinge screw and rotatably coupling the first housing and the second housing,
wherein the support bracket further includes a front plate configured to receive the hinge screw and at least partially contacting the rear plate, and
wherein the hinge is located between the front plate and the support bracket.

6. The electronic device of claim 5,
wherein the hinge includes a hinge shaft, and a hinge plate, and
wherein the hinge plate includes:
a first portion configured to surround the hinge shaft, and
a second portion extending from the first portion, disposed between the front plate and the fastening part, and configured to receive the hinge screw.

7. The electronic device of claim 6, wherein in the first state, another surface of the third area is configured to contact the hinge plate.

8. The electronic device of claim 1,
wherein the at least one rubber member includes a hook protruding in a front direction, and
wherein the supporting part includes a protruding part configured to be coupled to the hook.

9. The electronic device of claim 8, wherein the at least one rotating part and the at least one fixing part are alternately disposed around the fastening part.

10. The electronic device of claim 3,
wherein the at least one rotating part includes a protrusion on a side surface of the rotating part, and
wherein one surface of the rotating part, which is in contact with the protrusion of the at least one fixing part, includes a recess corresponding to the protrusion of the rotating part.

11. The electronic device of claim 8, wherein the hook of the rubber member is coupled to the support bracket such that a position of the rubber member is fixed.

12. The electronic device of claim 1,
wherein the at least one rotating part includes a first rotating part, a second rotating part, and a third rotating part disposed at a regular interval with respect to the fastening part, and
wherein the at least one fixing part includes a first fixing part disposed between the first rotating part and the second rotating part, a second fixing part disposed between the second rotating part and the third rotating part, and a third fixing part disposed between the first rotating part and the third rotating part.

13. The electronic device of claim 3, further comprising:
a bonding member disposed between the first area of the at least one rotating part and the supporting part and configured to attach the first area to the supporting part.

14. The electronic device of claim 5, further comprising:
a keyboard module disposed to penetrate the front plate.

15. The electronic device of claim 14, further comprising:
a printed circuit board disposed in the first housing and electrically connected to the keyboard module.
